# FASCICULE DE BREVET EUROPEEN

(11) **EP 3 490 086 B1**
(45) Date de publication et mention de la délivrance du brevet: **25.03.2020**
(21) Numéro de dépôt: 18203059.3
(22) Date de dépôt: 29.10.2018
(51) Int. Cl.: H02B 1/32

(54) **SYSTEME DE SUPPORT POUR ARMOIRE ELECTRIQUE**
HALTERUNGSSYSTEM FÜR ELEKTRISCHEN SCHALTSCHRANK
SUPPORT SYSTEM FOR AN ELECTRICAL CABINET

(30) Priorité: 27.11.2017 FR 1761212
(43) Date de publication de la demande: 29.05.2019
(73) Titulaire: Schneider Electric Industries SAS, 92500 Rueil Malmaison (FR)
(72) Inventeur: CASTILLEJO TRIVIÑO, ÁNGEL, 38050 Grenoble Cedex 09 (FR); CHESA PASCUAL, ALBERT, 38050 Grenoble Cedex 09 (FR)
(74) Mandataire: Tripodi, Paul

(56) Documents cités:
- DE-A1-102007 039 881
- DE-C1- 4 013 379

## Description

### Domaine technique de l'invention

La présente invention se rapporte à un système de support destiné à être employé dans une armoire électrique. Ce système pourra comporter une plaque pour former un système d'étagère et/ou un autre élément fonctionnel afin de remplir une autre fonction.

### Etat de la technique

De manière connue, une armoire électrique est par exemple destinée à loger des appareils électriques, tels que disjoncteurs, contacteurs, variateurs de vitesse ou autres. Ces appareils peuvent être montés sur des rails, tels que des rails DIN agencés en traverse entre des montants verticaux montés à l'intérieur de l'armoire électrique. L'armoire électrique comporte une armature ou ossature métallique comprenant une base, des montants verticaux agencés sur la base et plusieurs traverses agencées entre les montants verticaux. Une telle ossature est par exemple décrite dans le brevet FR2796519B1**.**

Des ossatures sont également décrites dans les documents DE102007039881 A1, DE4013379 C1 et FR1573477A**.**

Pour différentes raisons, une telle armoire peut être amenée à remplir d'autres fonctions, telles que par exemple une fonction de stockage sur des étagères. Dans ce cas, il peut être utile de lui adjoindre une structure adaptée à la fonction que l'on souhaite lui donner.

Une ossature telle que décrite dans l'état de la technique ne dispose pas de ce type de structure.

Par ailleurs, pour envisager d'adjoindre une fonction de type stockage sur étagère, le système de support employé doit pouvoir remplir les objectifs suivants :
- Facilité d'installation ;
- Robustesse ;
- Capacité à supporter des lourdes charges ;
- Adaptabilité aisée à une armoire électrique existante ;
- Modularité ;
- Permettre une distribution horizontale et/ou verticale de charges à l'intérieur de l'armoire électrique ;

Le but de l'invention est donc de proposer un système de support permettant de pouvoir remplir différentes fonctions, notamment la fonction d'étagère, tout en remplissant les objectifs précités.

### Exposé de l'invention

Ce but est atteint par un système de support destiné à être employée dans une armoire électrique qui comporte une ossature comprenant une base inférieure (10a), des montants (11) verticaux et une base supérieure (10b), agencés pour former quatre faces latérales (12a, 12b, 12c, 12d) parallèles deux-à-deux, ledit système comportant un support formant une surface d'appui et un élément fonctionnel destiné à coopérer avec ledit support,
- Le support comportant une première série de deux traverses comprenant une première traverse et une deuxième traverse parallèles entre elles et une deuxième série de deux traverses comprenant une première traverse et une deuxième traverse parallèles entre elles,
- La première traverse et la deuxième traverse de la première série comportant chacune un premier profilé allongé suivant un premier axe (A1) longitudinal comprenant une section transversale d'un premier profil et deux extrémités,
- La première traverse et la deuxième traverse de la deuxième série comportant chacune un deuxième profilé allongé suivant une deuxième axe longitudinal comprenant une section transversale d'un deuxième profil et deux extrémités,
- La première traverse et la deuxième traverse de la première série étant destinés à être fixées entre deux montants verticaux de l'ossature suivant deux premières faces parallèles, la première traverse et la deuxième traverse de la deuxième série étant destinées à être fixées entre deux montants verticaux suivant deux autres faces parallèles de ladite ossature, Ledit système étant caractérisé en ce que :
- A chaque extrémité, la première traverse et la deuxième traverse de la première série comportent une patte de fixation,
- A chaque extrémité, la première traverse et la deuxième traverse de la deuxième série comportent deux pattes de fixation et une découpe agencée entre lesdites deux pattes de fixation,
- Ladite première série de traverses et ladite deuxième série de traverses coopèrent entre elles pour former un cadre support définissant ladite surface d'appui,
- A chaque extrémité, la première traverse et la deuxième traverse de la deuxième série coopèrent avec la première traverse ou la deuxième traverse de la première série de sorte que ladite découpe est configurée pour contourner ledit premier profil et que lesdites deux pattes de fixation sont agencées de part et d'autre dudit premier profilé.

Selon une particularité, le deuxième profil de la section transversale du deuxième profilé présente une forme en chapeau, définissant une partie centrale, deux surfaces d'appui parallèles et deux ailes externes.

Selon une autre particularité, chaque surface d'appui comporte des trous de fixation répartis sur la longueur du profilé.

Selon une autre particularité, chaque aile comporte des trous de fixation répartis sur la longueur du profilé.

Selon une autre particularité, chaque patte de fixation de la première traverse et de la deuxième traverse de la deuxième série est agencée pour prolonger une aile distincte du profilé.

Selon une autre particularité, le premier profil de la section transversale du premier profilé présente une forme en U.

Selon une autre particularité, le système comporte une plaque destinée à être positionnée sur ladite surface d'appui formée par ledit support.

Selon une autre particularité, ladite plaque recouvre la totalité du support ou partiellement ledit support.

Selon une autre particularité, le système comporte une ou plusieurs barres transversales fixées entre la première traverse et la deuxième traverse de la deuxième série.

L'invention concerne une ossature d'armoire électrique comprenant une base inférieure, des montants verticaux et une base supérieure, agencés pour former quatre faces latérales parallèles deux-à-deux, ladite ossature comportant un premier système de support tel que défini ci-dessus, la première traverse et la deuxième traverse de la première série étant fixées entre deux montants verticaux de l'ossature suivant deux premières faces parallèles, la première traverse et la deuxième traverse de la deuxième série étant fixées entre deux montants verticaux suivant deux autres faces parallèles de ladite ossature.

Selon une autre particularité, l'ossature comporte un deuxième système de support tel que défini ci-dessus, identique au premier système, le premier système de support et le deuxième système de support étant superposé dans ladite ossature.

Selon une autre particularité, l'ossature comporte un ou plusieurs panneaux et/ou un ou plusieurs montants fixés d'une part au premier système de support et d'autre part au deuxième système de support.

Selon une autre particularité, chaque montant vertical comporte deux zones de fixation formant entre elles un angle droit et en ce que, sa première zone de fixation comporte des trous de fixation agencés pour coopérer avec la patte de fixation de la traverse de la première série et la deuxième zone de fixation comporte des trous de fixation agencés pour coopérer avec les deux pattes de fixation de la traverse de la deuxième série.

### Brève description des figures

D'autres caractéristiques et avantages vont apparaître dans la description détaillée qui suit faite en regard des dessins annexés, listés ci-dessous :
- La figure 1 représente, en perspective, une ossature d'armoire électrique sur laquelle sont installés plusieurs systèmes de support conformes à l'invention ;
- Les figure 2A et 2B représentent deux configurations distinctes du système de support conforme à l'invention, adapté sur une ossature d'armoire électrique ;
- Les figures 3A à 3C illustrent les étapes de montage d'un système de support conforme à l'invention sur une ossature d'armoire électrique ;
- La figure 4 représente, vue de dessus, le support employé dans le système de l'invention ;
- Les figures 5A et 5B illustrent le principe de fixation du support employé dans le système de l'invention ;

### Description détaillée d'au moins un mode de réalisation

Pour la suite de la description, on définit un axe principal (X) tracé verticalement dans le plan de la feuille.

L'invention vise un système de support destiné à être intégré à l'ossature d'une armoire électrique.

Le système de support est destiné à apporter une fonction à une armoire électrique en venant se fixer sur l'ossature de ladite armoire.

De manière non limitative et à titre d'exemple, le système de support peut présenter une ou plusieurs des fonctions ci-dessous :
- Une fonction de support de type étagère ;
- Une fonction de type support de panneau vertical ou de montant vertical ;
- Une fonction de support de barres transversales de montage ;

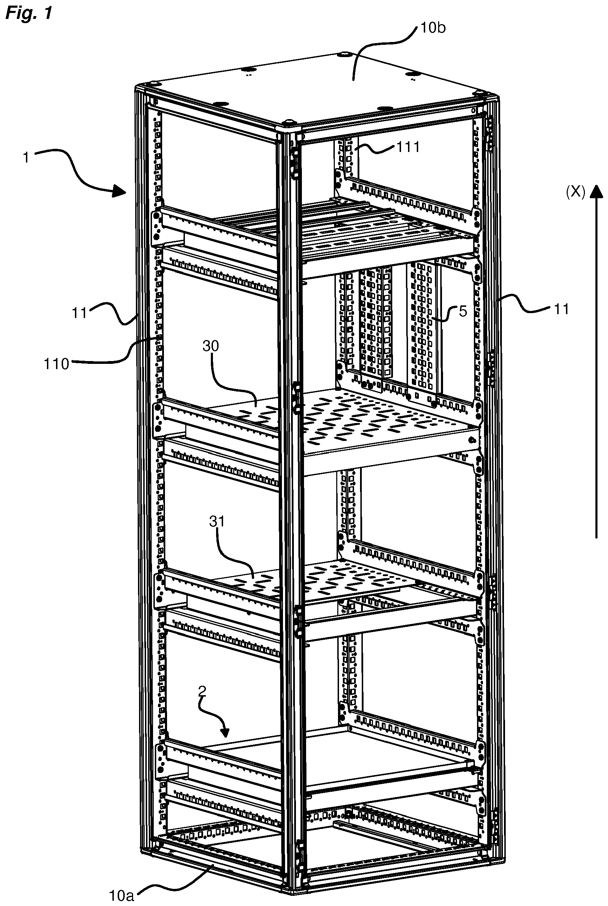

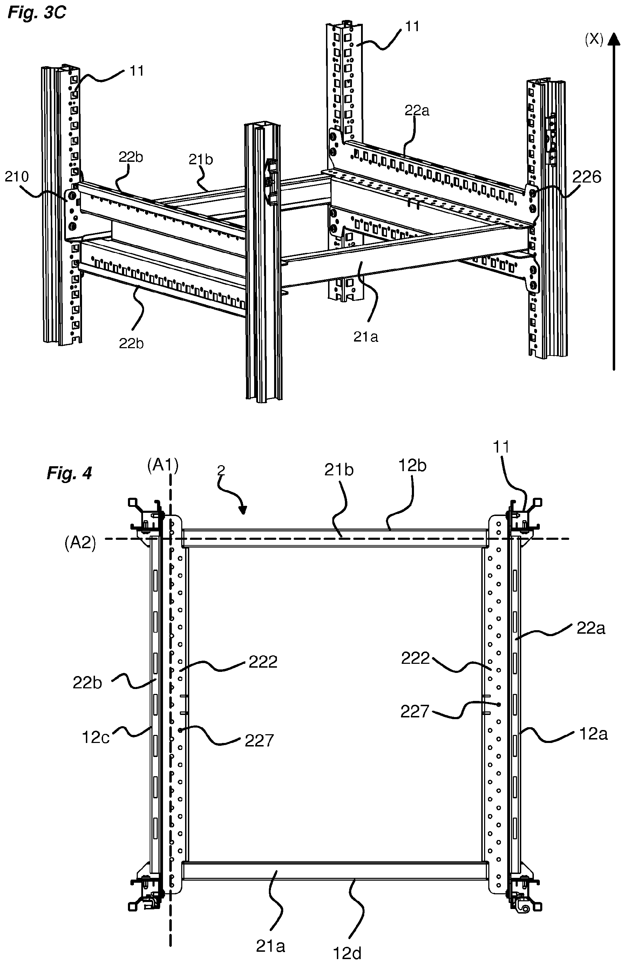

En référence à la figure 1, une ossature 1 d'armoire électrique est formée de profilés assemblés entre eux. L'ossature 1 comporte ainsi en règle générale une base 10a inférieure, de forme rectangulaire ou carrée, des montants 11 venant se fixer aux quatre coins de la base inférieure 10a et se dressant à la verticale et une base supérieure 10b parallèle à la base inférieure. L'ossature définit ainsi quatre faces 12a, 12b, 12c, 12d (figure 4) latérales, parallèles deux à deux.

Des panneaux (non visibles) peuvent être fixés sur les montants 11 pour former l'enveloppe de l'armoire électrique. Chaque montant 11 vertical peut se présenter sous la forme d'un profilé comprenant des trous 110 régulièrement espacés, permettant d'y fixer en transverse tout type d'architecture. De manière non limitative et à titre d'exemple, un tel profilé peut présenter une section transversale telle que celle décrite dans le brevet EP1601074B1**.** Cette section comporte au moins deux zones de fixation 111 en angle droit, dites première zone et deuxième zone de fixation, comprenant chacune des trous de fixation 110 répartis sur toute la hauteur du montant 11. Pour chaque montant vertical, les zones de fixation 111 sont orientées vers l'intérieur de l'armoire et sont disponibles pour la fixation de toute structure. La solution de l'invention pourra cependant s'adapter sur d'autres types de profilés existants.

Le système de support de l'invention est destiné à venir s'adapter directement à l'ossature 1 de l'armoire électrique.

Le système de support conforme à l'invention comporte au moins un support 2 tel que décrit ci-dessous et peut comporter au moins un élément fonctionnel lui permettant de remplir sa fonction.

Le support se présente sous la forme d'un cadre de forme rectangulaire ou carrée, réalisée grâce à plusieurs traverses.

De manière non limitative, l'élément fonctionnel peut être une plaque 30, 31 de manière à former un système d'étagère, une ou plusieurs barres 4 de montage, un panneau de support 5, un ou plusieurs montants.

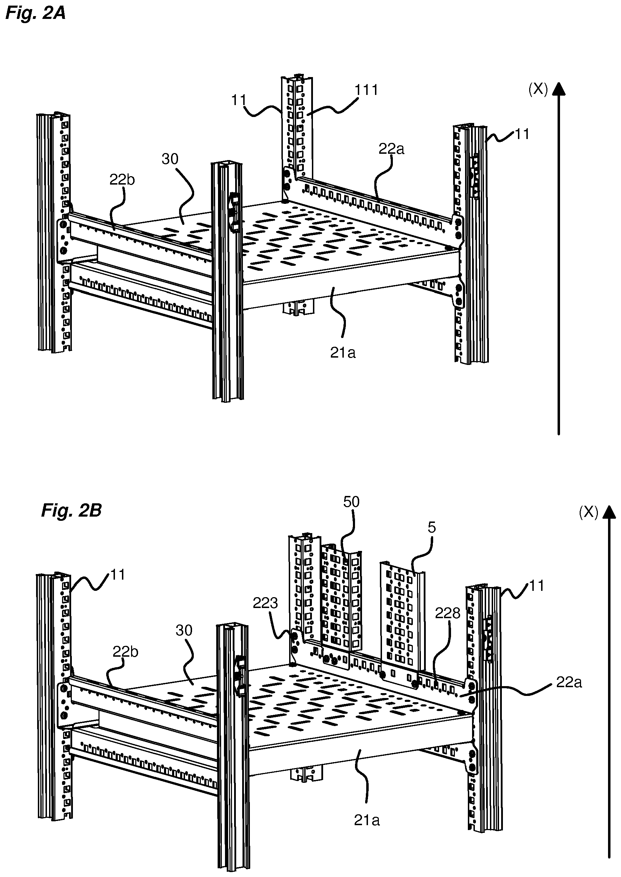

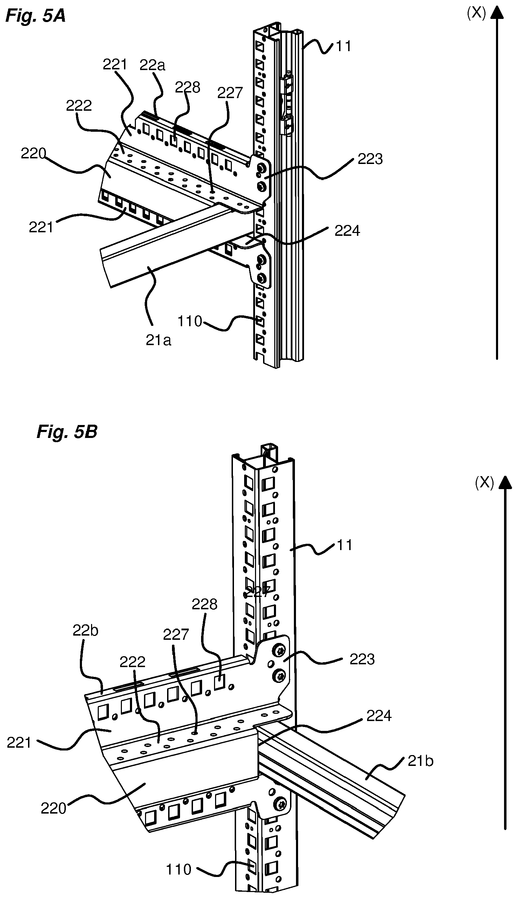

En référence aux figures 2A à 5B, le support 2 du système comporte une première série de deux traverses 21 a, 21 b et une deuxième série de deux traverses 22a, 22b.

La première série de deux traverses comporte une première traverse 21a et une deuxième traverse 21b. Chacune de ces deux traverses est destinée à être fixée entre deux montants 11 de l'ossature, suivant un plan transversal à l'axe principal (X). Elles sont fixées de manière à être positionnées suivant deux faces latérales parallèles (12b, 12d sur les figures) de l'ossature 1 et à une même hauteur par rapport à la base inférieure 10a de l'ossature 1 de manière à définir au moins un plan d'appui.

Chacune de ces deux traverses 21a, 21b est formée d'un profilé métallique allongé suivant un axe dit longitudinal A1 (figure 4). Le profilé présente une section transversale ayant un profil en U et comporte deux extrémités. A chaque extrémité, le profilé comporte une patte de fixation 210. Les deux pattes de fixation sont identiques. Chaque patte de fixation 210 s'étend suivant un plan parallèle à son axe longitudinal et comporte un ou plusieurs trous de fixation transversaux. Lors de la fixation de la traverse, chaque patte de fixation 210 s'étend de manière à venir en appui contre une zone d'appui d'un montant vertical de l'ossature. Chacun de ses trous de fixation est positionné en vis-à-vis d'un trou de fixation présent sur le montant 11 vertical. Un dispositif de fixation de type vis-boulon ou autre est ensuite employé pour assurer la fixation de la traverse à chaque extrémité par sa patte de fixation. A chaque extrémité, la patte de fixation 210 est fixée sur la première zone de fixation du montant vertical.

Cette première série de deux traverses 21a, 21b forme ainsi une première partie du support 2 du système de support.

La deuxième série de traverses du support comporte deux autres traverses 22a, 22b destinées à venir se positionner parallèlement suivant les deux autres faces de l'ossature. Ces deux traverses sont avantageusement identiques.

Chacune de ces deux traverses 22a, 22b de la deuxième série se compose d'un profilé métallique allongé suivant un axe dit longitudinal A2 (figure 4) et comprenant deux extrémités. Ledit profilé est avantageusement symétrique, à la fois par rapport à un plan médian longitudinal et par rapport à un plan médian transversal. Le profilé peut présenter une section transversale ayant un profil en forme de chapeau, formant ainsi une partie centrale 220 ayant une section transversale présentant un profil en U et deux ailes latérales 221. Sa partie centrale à section en U définit deux surfaces d'appui 222 parallèles et symétriques par rapport audit plan médian longitudinal et qui s'étendent chacune entre ses deux extrémités suivant au moins une partie de la longueur du profilé. Dans le profilé, chaque aile 221 s'étend vers l'extérieur, perpendiculairement à une surface d'appui 222.

A chaque extrémité, une traverse 22a, 22b de la deuxième série comporte deux pattes de fixation 223 prolongeant chacune une aile distincte du profilé et une découpe 224 agencée entre les deux pattes de fixation.

Les deux pattes de fixation 223 s'étendent chacune suivant un plan perpendiculaire aux surfaces d'appui 222 et parallèlement à l'axe longitudinal A2 de la traverse. Chaque patte de fixation 223 peut être dotée de trous de fixation 225 agencés pour coopérer avec des trous de fixation réalisés sur le montant vertical associé, afin d'y laisser passer une vis 226 ou autre solution de fixation. A chaque extrémité, les deux pattes de fixation 223 sont fixées sur la deuxième zone de fixation du montant vertical, distincte de la première zone de fixation de la traverse de la première série sur ce même montant vertical.La découpe 224 est réalisée suivant un plan perpendiculaire aux surfaces d'appui 222 et parallèle à l'axe longitudinal A2 de la traverse 22a, 22b.

Pour une traverse 22a, 22b de la deuxième série, à chaque extrémité, sa découpe 224 est configurée de manière à contourner, voir épouser, le profil de la section transversale d'une traverse de la première série 21a, 21b.

Les deux traverses 22a, 22b de la deuxième série sont agencées de manière à présenter deux surfaces d'appui 222 dans un même plan, perpendiculaire à l'axe principal (X). Ce plan peut servir ainsi de surface d'appui pour une plaque 30, 31 du système.

A travers chaque surface d'appui 222, la traverse peut comporter des trous de fixation 227 répartis sur la longueur de la traverse.

A travers chaque aile 221, une traverse 22a, 22b de la deuxième série peut comporter des trous de fixation 228.

Le système de support peut comporter une plaque configurée pour venir en appui contre la surface d'appui formée par le support.

Selon la configuration choisie, en référence à la figure 1, la plaque 30 peut être dimensionnée pour recouvrir la totalité du support ou la plaque 31 peut être dimensionnée pour recouvrir seulement une partie du support.

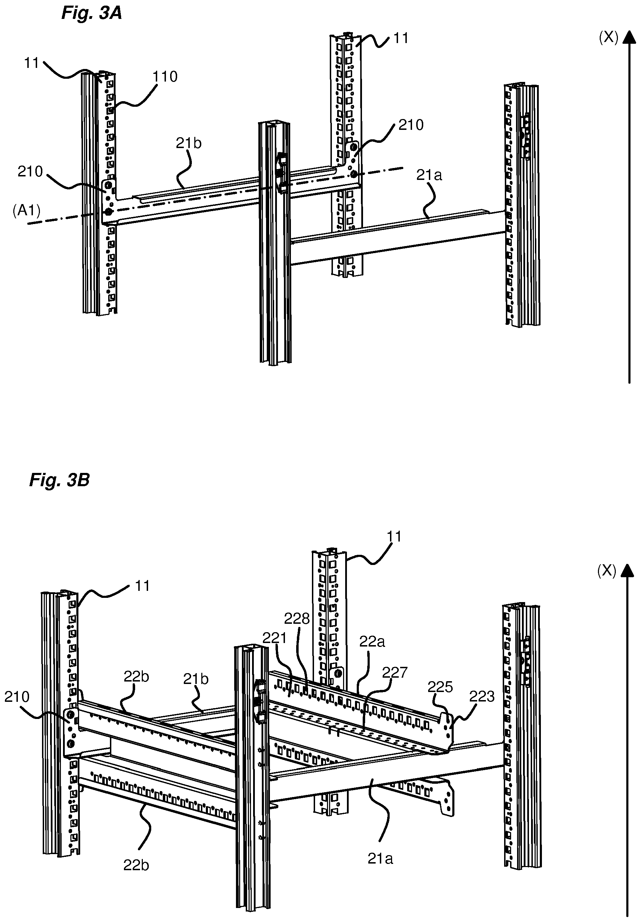

En référence aux figures 3A à 3C, l'installation d'un système de support conforme à l'invention est le suivant :
- **Figure 3A** : Les deux traverses 21a, 21b de la première série sont chacune fixées entre deux montants 11 de l'ossature de manière à s'étendre suivant deux faces parallèles 12b, 12d de l'ossature ; Elles sont positionnées à une même hauteur par rapport à la base inférieure 10a de l'ossature ;
- **Figure 3B** : Les deux traverses 22a, 22b de la deuxième série sont chacune insérées entre les deux traverses de la première série ; Leur découpe présente à chacune de leur extrémité permet une insertion aisée dans n'importe quelle position transversale entre les deux traverses de la première série ; A chacune de ses deux extrémités, sa découpe 224 vient épouser le profil de la section transversale de la traverse 21a, 21b de la première série et vient en appui contre celle-ci ; La figure 3B montre ainsi la traverse 22a positionnée entre les deux traverses 21a, 21b de la première série, avant sa fixation ;
- **Figure 3C** : Les deux traverses 22a, 22b de la deuxième série sont ensuite ramenées chacune entre deux montants 11 de l'ossature de manière à s'étendre suivant les deux autres faces parallèles 12a, 12c de l'ossature ; Elles sont fixées par leurs pattes de fixation 223 sur leurs deux montants respectifs ; Le support 2 est ainsi formé ; Un ou plusieurs éléments fonctionnels peuvent être ajoutés au support du système, par exemple une plaque 30, 31 pour former une étagère, un panneau 5, un ou plusieurs montants verticaux, des barres de montage 4... Selon la configuration choisie, ces différentes solutions de support peuvent être combinées entre elles afin de proposer une distribution verticale et/ou horizontale d'appareils à l'intérieur de l'armoire ;

Selon un aspect particulier de l'invention, les traverses 21a, 21b de la première série et les traverses 22a, 22b de la deuxième série coopèrent entre elles de manière à former plusieurs zones de blocage à chacune de leur zone de connexion. Chaque zone de blocage est réalisée à l'interface entre la découpe d'une traverse de la deuxième série et une zone d'appui correspondante de la traverse de la première série qui est située en vis-à-vis.

En référence aux figures annexées :
- Le support 2, formé des quatre traverses, peut accueillir une plaque 30 formant une étagère sur la surface d'appui du support ; La plaque est fixée sur les trous de fixation des deux surfaces d'appui ;
- La plaque peut être dimensionnée de manière à recouvrir la totalité du support ou seulement une partie de celui-ci ;
- Grâce aux trous de fixation 227, il est également possible de fixer une ou plusieurs barres de montage 4 entre les deux traverses 22a, 22b de la deuxième série ;
- Grâce aux trous de fixation 228, il est possible de dresser un ou plusieurs panneaux 5 verticaux entre deux traverses de la deuxième série positionnées l'une au-dessus de l'autre suivant la même face (12a sur les figures) de l'ossature 1 ; chaque panneau 5 peut comporter des trous de fixation 50 pour y fixer par exemple un appareil électrique ;

Le système de l'invention présente ainsi de nombreux avantages, parmi lesquels :
- Il est facile à installer et donc à remplacer si nécessaire ;
- Il permet de réaliser différentes fonctions, telles que support pour étagère, pour panneau, pour barres de montages...
- Il peut être installé sans démonter les panneaux de l'armoire électrique, celui-ci-venant se fixer sur les zones de fixation disponibles des montants verticaux ;
- Il permet de renforcer la rigidité globale de l'ossature en fixant des traverses intermédiaires ;
- Plusieurs systèmes identiques peuvent être installées dans une même armoire ;
- Il peut être configuré pour comporter des ouvertures nécessaires à la ventilation dans l'armoire ;
- Il peut permettre de placer des charges lourdes sur une étagère, tout en proposant des solutions de fixation à la verticale, par exemple via des panneaux 5 ou des montants verticaux fixés entre deux systèmes superposés ;

## Revendications

1. Système de support destiné à être employée dans une armoire électrique qui comporte une ossature comprenant une base inférieure (10a), des montants (11) verticaux et une base supérieure (10b), agencés pour former quatre faces latérales (12a, 12b, 12c, 12d) parallèles deux-à-deux, ledit système comportant un support (2) formant une surface d'appui et un élément fonctionnel destiné à coopérer avec ledit support,
- Le support (2) comportant une première série de deux traverses comprenant une première traverse (21a) et une deuxième traverse (21b) parallèles entre elles et une deuxième série de deux traverses comprenant une première traverse (22a) et une deuxième traverse (22b) parallèles entre elles,
- La première traverse (21a) et la deuxième traverse (21b) de la première série comportant chacune un premier profilé allongé suivant un premier axe (A1) longitudinal qui comporte une section transversale d'un premier profil et deux extrémités,
- La première traverse (22a) et la deuxième traverse (22b) de la deuxième série comportant chacune un deuxième profilé allongé suivant une deuxième axe (A2) longitudinal qui comporte une section transversale d'un deuxième profil et deux extrémités,
- La première traverse (21a) et la deuxième traverse (21b) de la première série étant destinés à être fixées entre deux montants verticaux de l'ossature suivant deux premières faces parallèles, la première traverse (22a) et la deuxième traverse (22b) de la deuxième série étant destinées à être fixées entre deux montants verticaux suivant deux autres faces parallèles de ladite ossature,
**caractérisé en ce que** :
- A chaque extrémité, la première traverse (21a) et la deuxième traverse (21b) de la première série comportent une patte de fixation (210), pour se fixer sur le montant vertical de ladite ossature,
- A chaque extrémité, la première traverse (22a) et la deuxième traverse (22b) de la deuxième série comportent deux pattes de fixation (223), pour se fixer sur le montant vertical de l'ossature, et une découpe (224) agencée entre lesdites deux pattes de fixation,
- Ladite première série de traverses et ladite deuxième série de traverses coopèrent entre elles pour former un cadre support définissant ladite surface d'appui,
- A chaque extrémité, la première traverse (22a) et la deuxième traverse (22b) de la deuxième série coopèrent avec la première traverse (21a) ou la deuxième traverse (21b) de la première série de sorte que ladite découpe (224) est configurée pour contourner ledit premier profil et que lesdites deux pattes de fixation (223) sont agencées de part et d'autre dudit premier profilé.

2. Système selon la revendication 1, **caractérisé en ce que** le deuxième profil de la section transversale du deuxième profilé présente une forme en chapeau, définissant une partie centrale (220), deux surfaces d'appui (222) parallèles et deux ailes externes (221).

3. Système selon la revendication 2, **caractérisé en ce que** chaque surface d'appui (222) comporte des trous de fixation (227) répartis sur la longueur du profilé.

4. Système selon la revendication 2 ou 3, **caractérisé en ce que** chaque aile (221) comporte des trous de fixation (228) répartis sur la longueur du profilé.

5. Système selon l'une des revendications 1 à 4, **caractérisé en ce que** chaque patte de fixation (223) de la première traverse et de la deuxième traverse de la deuxième série est agencée pour prolonger une aile (221) distincte du profilé.

6. Système selon l'une des revendications 1 à 5, **caractérisé en ce que** le premier profil de la section transversale du premier profilé présente une forme en U.

7. Système selon l'une des revendications 1 à 6, **caractérisé en ce qu'**il comporte une plaque (30, 31) destinée à être positionnée sur ladite surface d'appui formée par ledit support.

8. Système selon la revendication 7, **caractérisé en ce que** ladite plaque recouvre la totalité du support ou partiellement ledit support.

9. Système selon l'une des revendications 1 à 6, **caractérisé en ce qu'**il comporte une ou plusieurs barres (4) transversales fixées entre la première traverse (22a) et la deuxième traverse (22b) de la deuxième série.

10. Ossature d'armoire électrique comprenant une base inférieure (10a), des montants (11) verticaux et une base supérieure (10b), agencés pour former quatre faces latérales (12a, 12b, 12c, 12d) parallèles deux-à-deux, **caractérisée en ce qu'**elle comporte un premier système de support tel que défini dans l'une des revendications 1 à 9, et **en ce que** la première traverse (21a) et la deuxième traverse (21b) de la première série sont fixées entre deux montants verticaux de l'ossature suivant deux premières faces parallèles, la première traverse (22a) et la deuxième traverse (22b) de la deuxième série sont fixées entre deux montants verticaux suivant deux autres faces parallèles de ladite ossature.

11. Ossature selon la revendication 10, **caractérisée en ce qu'**elle comporte un deuxième système de support tel que défini dans l'une des revendications 1 à 9, le premier système de support et le deuxième système de support étant superposé dans ladite ossature.

12. Ossature selon la revendication 11, **caractérisée en ce qu'**elle comporte un ou plusieurs panneaux (5) et/ou un ou plusieurs montants fixés d'une part au premier système de support et d'autre part au deuxième système de support.

13. Ossature selon l'une des revendications 10 à 12, **caractérisée en ce que** chaque montant vertical (11) comporte deux zones de fixation (111) formant entre elles un angle droit et **en ce que**, sa première zone de fixation comporte des trous de fixation agencés pour coopérer avec la patte de fixation de la traverse de la première série et la deuxième zone de fixation comporte des trous de fixation agencés pour coopérer avec les deux pattes de fixation de la traverse de la deuxième série.

## Patentansprüche

1. Halterungssystem, welches dazu bestimmt ist, in einem elektrischen Schaltschrank verwendet zu werden, welcher ein Gerüst aufweist, das einen unteren Boden (10a), vertikale Stützen (11) und einen oberen Boden (10b) umfasst, die so angeordnet sind, dass sie vier paarweise parallele Seitenflächen (12a, 12b, 12c, 12d) bilden, wobei das System eine Halterung (2), die eine Stützfläche bildet, und ein funktionales Element, das dazu bestimmt ist, mit der Halterung zusammenzuwirken, aufweist,
- wobei die Halterung (2) eine erste Reihe von zwei Querstreben aufweist, die eine erste Querstrebe (21a) und eine zweite Querstrebe (21b) umfasst, die zueinander parallel sind, und eine zweite Reihe von zwei Querstreben, die eine erste Querstrebe (22a) und eine zweite Querstrebe (22b) umfasst, die zueinander parallel sind,
- wobei die erste Querstrebe (21a) und die zweite Querstrebe (21b) der ersten Reihe jeweils ein entlang einer ersten Längsachse (A1) lang gestrecktes erstes Profilteil aufweisen, welches einen Querschnitt eines ersten Profils und zwei Enden aufweist,
- wobei die erste Querstrebe (22a) und die zweite Querstrebe (22b) der zweiten Reihe jeweils ein entlang einer zweiten Längsachse (A2) lang gestrecktes zweites Profilteil aufweisen, welches einen Querschnitt eines zweiten Profils und zwei Enden aufweist,
- wobei die erste Querstrebe (21a) und die zweite Querstrebe (21b) der ersten Reihe dazu bestimmt sind, zwischen zwei vertikalen Stützen des Gerüsts entlang von zwei ersten parallelen Flächen befestigt zu werden, wobei die erste Querstrebe (22a) und die zweite Querstrebe (22b) der zweiten Reihe dazu bestimmt sind, zwischen zwei vertikalen Stützen entlang von zwei anderen parallelen Flächen dieses Gerüsts befestigt zu werden,
**dadurch gekennzeichnet, dass**:
- die erste Querstrebe (21a) und die zweite Querstrebe (21b) der ersten Reihe an jedem Ende eine Befestigungslasche (210) aufweisen, um an der vertikalen Stütze des Gerüsts befestigt zu werden,
- die erste Querstrebe (22a) und die zweite Querstrebe (22b) der zweiten Reihe an jedem Ende zwei Befestigungslaschen (223), um an der vertikalen Stütze des Gerüsts befestigt zu werden, und einen Ausschnitt (224), der zwischen den zwei Befestigungslaschen angeordnet ist, aufweisen,
- die erste Reihe von Querstreben und die zweite Reihe von Querstreben zusammenwirken, um einen Halterahmen zu bilden, der die Stützfläche definiert,
- die erste Querstrebe (22a) und die zweite Querstrebe (22b) der zweiten Reihe an jedem Ende mit der ersten Querstrebe (21a) oder der zweiten Querstrebe (21b) der ersten Reihe derart zusammenwirken, dass der Ausschnitt (224) dazu ausgebildet ist, um das erste Profil herumzuführen, und dass die zwei Befestigungslaschen (223) beiderseits des ersten Profilteils angeordnet sind.

2. System nach Anspruch 1, **dadurch gekennzeichnet, dass** das zweite Profil des Querschnitts des zweiten Profilteils eine Hutform aufweist, die einen mittleren Teil (220), zwei parallele Stützflächen (222) und zwei äußere Schenkel (221) definiert.

3. System nach Anspruch 2, **dadurch gekennzeichnet, dass** jede Stützfläche (222) Befestigungslöcher (227) aufweist, die über die Länge des Profilteils verteilt sind.

4. System nach Anspruch 2 oder 3, **dadurch gekennzeichnet, dass** jeder Schenkel (221) Befestigungslöcher (228) aufweist, die über die Länge des Profilteils verteilt sind.

5. System nach einem der Ansprüche 1 bis 4, **dadurch gekennzeichnet, dass** jede Befestigungslasche (223) der ersten Querstrebe und der zweiten Querstrebe der zweiten Reihe so angeordnet ist, dass sie einen bestimmten Schenkel (221) des Profilteils verlängert.

6. System nach einem der Ansprüche 1 bis 5, **dadurch gekennzeichnet, dass** das erste Profil des Querschnitts des ersten Profilteils eine U-Form aufweist.

7. System nach einem der Ansprüche 1 bis 6, **dadurch gekennzeichnet, dass** es eine Platte (30, 31) aufweist, die dazu bestimmt ist, auf der Stützfläche positioniert zu werden, die von der Halterung gebildet wird.

8. System nach Anspruch 7, **dadurch gekennzeichnet, dass** die Platte die gesamte Halterung bedeckt oder sie teilweise bedeckt.

9. System nach einem der Ansprüche 1 bis 6, **dadurch gekennzeichnet, dass** es eine oder mehrere Querstangen (4) aufweist, die zwischen der ersten Querstrebe (22a) und der zweiten Querstrebe (22b) der zweiten Reihe befestigt sind.

10. Gerüst eines Schaltschranks, welches einen unteren Boden (10a), vertikale Stützen (11) und einen oberen Boden (10b) umfasst, die so angeordnet sind, dass sie vier paarweise parallele Seitenflächen (12a, 12b, 12c, 12d) bilden, **dadurch gekennzeichnet, dass** es ein erstes Halterungssystem aufweist, wie in einem der Ansprüche 1 bis 9 definiert, und dadurch, dass die erste Querstrebe (21a) und die zweite Querstrebe (21b) der ersten Reihe zwischen zwei vertikalen Stützen des Gerüsts entlang von zwei ersten parallelen Flächen befestigt sind und die erste Querstrebe (22a) und die zweite Querstrebe (22b) der zweiten Reihe zwischen zwei vertikalen Stützen entlang von zwei anderen parallelen Flächen dieses Gerüsts befestigt sind.

11. Gerüst nach Anspruch 10, **dadurch gekennzeichnet, dass** es ein zweites Halterungssystem aufweist, wie in einem der Ansprüche 1 bis 9 definiert, wobei das erste Halterungssystem und das zweite Halterungssystem in dem Gerüst übereinander angeordnet sind.

12. Gerüst nach Anspruch 11, **dadurch gekennzeichnet, dass** es ein oder mehrere Paneele (5) und/oder eine oder mehrere Stützen aufweist, die einerseits am ersten Halterungssystem und andererseits am zweiten Halterungssystem befestigt sind.

13. Gerüst nach einem der Ansprüche 10 bis 12, **dadurch gekennzeichnet, dass** jede vertikale Stütze (11) zwei Befestigungsbereiche (111) aufweist, die miteinander einen rechten Winkel bilden, und dadurch, dass ihr erster Befestigungsbereich Befestigungslöcher aufweist, die dafür ausgebildet sind, mit der Befestigungslasche der Querstrebe der ersten Reihe zusammenzuwirken, und der zweite Befestigungsbereich Befestigungslöcher aufweist, die dafür ausgebildet sind, mit den zwei Befestigungslaschen der Querstrebe der zweiten Reihe zusammenzuwirken.

## Claims

1. Support system intended to be employed in an electrical cabinet which comprises a framework comprising a bottom base (10a), vertical uprights (11) and a top base (10b), arranged to form four pairwise parallel lateral faces (12a, 12b, 12c, 12d), said system comprising a support (2) forming a bearing surface and a functional element intended to cooperate with said support,
- the support (2) comprising a first series of two crossmembers comprising a first crossmember (21a) and a second crossmember (21b) that are parallel to one another and a second series of two crossmembers comprising a first crossmember (22a) and a second crossmember (22b) that are parallel to one another,
- the first crossmember (21a) and the second crossmember (21b) of the first series each comprising a first elongate sectional bar along a first longitudinal axis (A1) which comprises a transverse section of a first profile and two ends,
- the first crossmember (22a) and the second crossmember (22b) of the second series each comprising a second elongate sectional bar along a second longitudinal axis (A2) which comprises a transverse section of a second profile and two ends,
- the first crossmember (21a) and the second crossmember (21b) of the first series being intended to be fixed between two vertical uprights of the framework along two first parallel faces, the first crossmember (22a) and the second crossmember (22b) of the second series being intended to be fixed between two vertical uprights along two other parallel faces of said framework,
**characterized in that**:
- at each end, the first crossmember (21a) and the second crossmember (21b) of the first series comprise a fixing lug (210), to be fixed onto the vertical upright of said framework,
- at each end, the first crossmember (22a) and the second crossmember (22b) of the second series comprise two fixing lugs (223), to be fixed onto the vertical upright of the framework, and a cutout (224) arranged between said two fixing lugs,
- said first series of crossmembers and said second series of crossmembers cooperate with one another to form a support frame defining said bearing surface,
- at each end, the first crossmember (22a) and the second crossmember (22b) of the second series cooperate with the first crossmember (21a) or the second crossmember (21b) of the first series so that said cutout (224) is configured to circumvent said first profile and so that said two fixing lugs (223) are arranged on either side of said first sectional bar.

2. System according to Claim 1, **characterized in that** the second profile of the transverse section of the second sectional bar has a cap form, defining a central part (220), two parallel bearing surfaces (222) and two external wings (221).

3. System according to Claim 2, **characterized in that** each bearing surface (222) comprises fixing holes (227) distributed over the length of the sectional bar.

4. System according to Claim 2 or 3, **characterized in that** each wing (221) comprises fixing holes (228) distributed over the length of the sectional bar.

5. System according to one of Claims 1 to 4, **characterized in that** each fixing lug (223) of the first crossmember and of the second crossmember of the second series is arranged to extend a distinct wing (221) of the sectional bar.

6. System according to one of Claims 1 to 5, **characterized in that** the first profile of the transverse section of the first sectional bar is U-shaped.

7. System according to one of Claims 1 to 6, **characterized in that** it comprises a plate (30, 31) intended to be positioned on said bearing surface formed by said support.

8. System according to Claim 7, **characterized in that** said plate covers all of the support or partially covers said support.

9. System according to one of Claims 1 to 6, **characterized in that** it comprises one or more transverse bars (4) fixed between the first crossmember (22a) and the second crossmember (22b) of the second series.

10. Electrical cabinet framework comprising a bottom base (10a), vertical uprights (11) and a top base (10b), arranged to form four pairwise parallel lateral faces (12a, 12b, 12c, 12d), **characterized in that** it comprises a first support system as defined in one of Claims 1 to 9, and **in that** the first crossmember (21a) and the second crossmember (21b) of the first series are fixed between two vertical uprights of the framework along two first parallel faces, the first crossmember (22a) and the second crossmember (22b) of the second series are fixed between two vertical uprights along two other parallel faces of said framework.

11. Framework according to Claim 10, **characterized in that** it comprises a second support system as defined in one of Claims 1 to 9, the first support system and the second support system being superposed in said framework.

12. Framework according to Claim 11, **characterized in that** it comprises one or more panels (5) and/or one or more uprights fixed on one side to the first support system and on the other side to the second support system.

13. Framework according to one of Claims 10 to 12, **characterized in that** each vertical upright (11) comprises two fixing zones (111) forming between them a right angle and **in that**, its first fixing zone comprises fixing holes arranged to cooperate with the fixing lug of the crossmember of the first series and the second fixing zone comprises fixing holes arranged to cooperate with the two fixing lugs of the crossmember of the second series.
